# EUROPEAN PATENT SPECIFICATION

(11) **EP 1 564 429 B1**
(45) Date of publication and mention of the grant of the patent: **23.09.2009**
(21) Application number: 05100991.8
(22) Date of filing: 11.02.2005
(51) Int. Cl.: F16D 55/227, F16D 55/00

(54) **Mounting plate and method for the attachment of a disc brake caliper to an axle.**
Trägerplatte und Verfahren zur Befestigung eines Scheibenbremssattels an einer Achse
Plaque de support et procédé pour fixation d'un étrier de frein à disque.

(30) Priority: 12.02.2004 US 544281
(43) Date of publication of application: 17.08.2005
(73) Proprietor: DEERE & COMPANY, Moline, Illinois 61265-8098 (US)
(72) Inventor: Hitt, Brian James, Forest Lake, 55025 MN (US); Ramey, Kenneth, Thousand Oaks, 91362 CA (US); McChesney, Jeffrey Scott, Moorpark, 93021 CA (US)
(74) Representative: Magin, Ludwig Bernhard

(56) References cited:
- EP-A- 0 849 486
- EP-A- 0 936 372
- US-A- 5 316 110
- US-B1- 6 234 278

## Description

The present invention relates generally to brake components for motor vehicles including utility vehicles, all terrain vehicles and vehicles that carry passengers and/or cargo. More specifically, the invention relates to mounting disk brake components to such vehicles.

Utility vehicles such as Gator^{™} utility vehicles available from Deere and Company of Moline, Illinois, may use disk brakes for braking some or all of the wheels. Each disk brake has opposing brake pads that may be pressed against both sides of a rotor to slow or stop its rotation. Brake calipers that hold and compress the pair of brake pads against the rotor may be actuated by a piston reciprocating in a cylinder.

Assembly of these disk brake components to a utility vehicle may be critical to the function and safety of the brake system, and may require significant assembly time by skilled manual labor to assure that opposing brake pads are properly positioned with respect to the rotor. Assembly includes attaching a stationary mounting plate to a flange surrounding or adjacent the vehicle's axle with threaded fasteners (i.e., carriage bolts). The rotor then may be bolted to the axle. The brake calipers then may be attached to the stationary mounting plate so that the opposing brake pads are properly positioned on each side of the rotor.

US-A-5,316,110 shows a trailer brake system including a disc brake assembly including an apparatus to provide release of the brake pads from engagement with the rotor upon braking. The brake assembly includes a stationary bracket for attachment to the axle and a caliper unit with the brake pads mounted by a single pivot pin on the bracket.

It is therefore an object of the present invention to simplify the assembly, and reduce the labor time and cost needed for mounting of disk brake components to a utility vehicle.

This object is met according to the invention by the teaching of claim 1, 5 or 9, while features developing the solution in an advantageous way are set forth in the further claims.

A disk brake subassembly simplifies the assembly, reduces labor time and cost for mounting of disk brake components.

Embodiments of the invention are defined by the dependent claims.

The complete disk brake subassembly is built before it is mounted to a vehicle. For example, the subassembly may be built at a time and/or location remote from assembly of the vehicle. The disk brake subassembly reduces or minimizes manual labor to mount disk brake calipers to a vehicle.

Embodiments of the invention described in more detail below are shown in the drawings, in which:
- FIG. 1: is a perspective view of a disk brake subassembly according to a first embodiment of the invention.
- FIG. 2: is a perspective view of a disk brake subassembly in a second embodiment of the invention.
- FIG. 3: is a perspective view of a disk brake assembly of FIG. 2, partially in section, mounted to an axle of a vehicle.

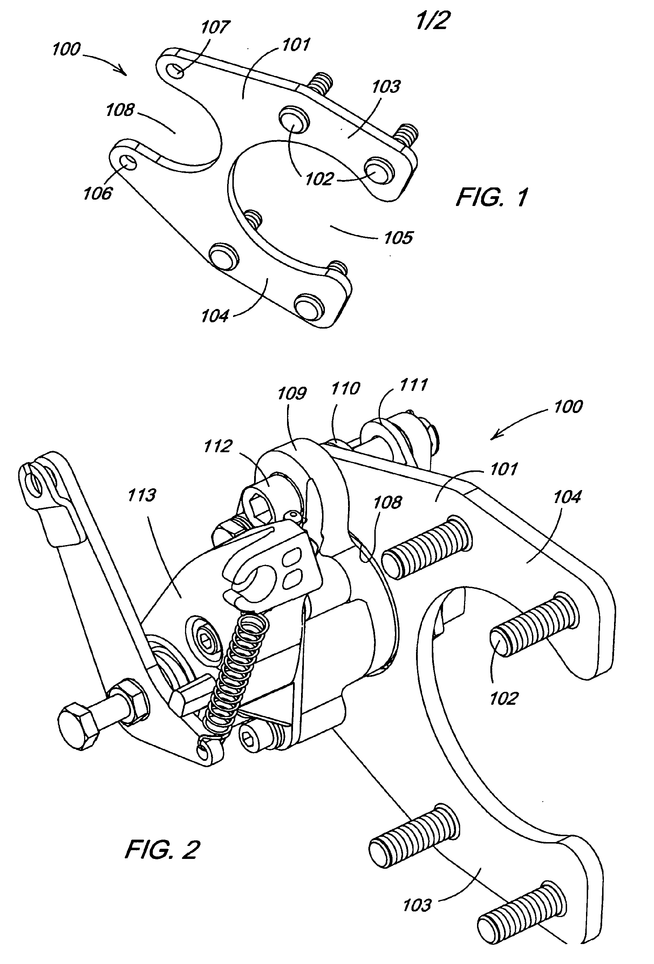

First referring to FIG. 1, disk brake subassembly 100 is shown according to one embodiment of the invention. The disk brake subassembly includes mounting plate 101 which may be steel having a thickness of about 6 mm, and a plurality of fasteners 102 attached and locked to the mounting plate. The fasteners are attached and locked to the mounting plate before the disk brake subassembly is mounted to a vehicle on or adjacent the axle housing.

In one embodiment, the fasteners are four threaded M10 studs, each stud having a knurled portion adjacent the fastener head.

In this embodiment, each M10 threaded fastener may be press fit into a hole in the mounting plate sufficiently to lock the knurled portion of the fastener in the hole. The invention contemplates that other threaded or unthreaded attachment devices also may be used to attach and lock similar fasteners to the mounting plate before the subassembly is mounted to a vehicle.

The fasteners may be attached and locked to holes in legs 103, 104 of the mounting plate shown in FIG. 1. When the disk brake subassembly is mounted to a vehicle, the axle may extend through opening 105. When the disk brake subassembly is attached to an axle housing, caliper body (not shown in FIG. 1) may extend through opening 108.

Now referring to FIG. 2, disk brake subassembly 100 is shown in a second embodiment having disk brake caliper body 109 and pads 110, 111 attached to mounting plate 101. The caliper brake may be operated hydraulically or mechanically. Just as in FIG. 1, the mounting plate may have a plurality of fasteners 102 attached and locked to legs 103, 104 before the disk brake subassembly is mounted to a vehicle on or adjacent the axle housing.

Additionally, the disk brake subassembly of FIG. 2 includes disk brake caliper body 109 which may extend through opening 108 in the mounting plate, and disk brake pads 110, 111 which may be activated to press against both sides of a rotor (not shown in FIG. 2). The disk brake caliper body may house a piston movable or capable of reciprocating in a cylinder to activate disk brake pads 110, 111 to slide on caliper pins 112, 122 and press against both sides of a rotor. The caliper pins may extend through holes 106, 107 in the mounting plate, and may be retained by lock rings 124. Additionally, parking brake subassembly 113 may be connected to the caliper body which is connected to the mounting plate. In one embodiment, the parking brake may mechanically actuate the brake, in addition to the hydraulic operation of the calipers. Alternatively, the calipers also may be operated mechanically.

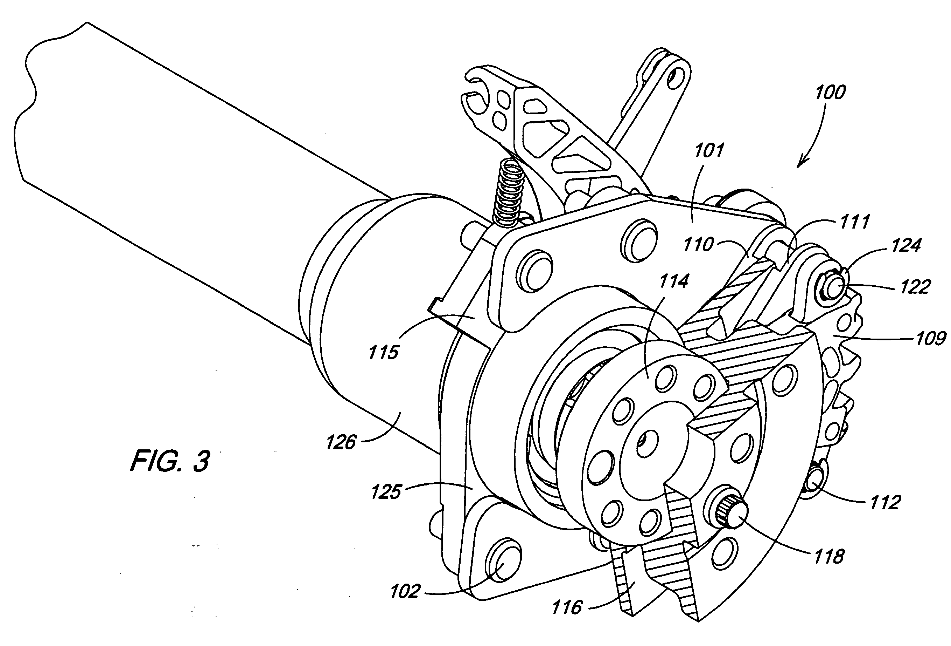

Now referring to FIG. 3, the disk brake subassembly of FIG. 2 is shown mounted to mounting flanges 115, 125 surrounding and extending laterally from at least part of the axle housing of a motor vehicle. For example, the flanges may extend from sleeve 126 which forms part of the housing covering the axle. To mount the disk brake assembly to mounting flanges 115, 125, fasteners 102 may be inserted through holes in the flanges. The fasteners hold the disk brake subassembly stationary. The disk brake subassembly may be mounted to another structure around or adjacent the vehicle axle which is sufficiently stationary with respect to the axle. During mounting of the disk brake assembly to the vehicle, brake pads 110, 111 may be positioned on opposing sides of rotor 116, which is shown partially in section. The rotor may be slid between the brake pads and connected to an end of axle 114 using fasteners 118.

In one embodiment, the disk brake subassembly which includes mounting plate 101, threaded fasteners 102, disk brake caliper body 109, brake pads 110, 111 and caliper pins 112, may be assembled together as a unit. Optionally, a parking brake sub assembly also may be included in the disk brake subassembly. The complete subassembly may be built before it is mounted to a vehicle. For example, the subassembly may be built at a time and/or location remote from assembly of the vehicle. As a result, manual labor to mount disk brake calipers to a vehicle may be reduced or minimized.

Having described a preferred embodiment, it will become apparent that various modifications can be made without departing from the scope of the invention as defined in the accompanying claims.

## Claims

1. An apparatus comprising a mounting plate (101) carrying a disk brake caliper body (109) and a pair of disk brake pads (110, 111), **characterized in that** the mounting plate (101), the disk brake caliper body (109) and the pair of disk brake pads (110, 112) form a subassembly (100), the mounting plate (101) having a plurality of preferably threaded fasteners (102) locked thereto and extending therefrom.

2. The apparatus according to claim 1, **characterized in that** the mounting plate (101) has an opening (105) through which an axle of a motor vehicle may extend and/or that the mounting plate (101) has an opening (108) through which the disk brake caliper body (109) may extend.

3. The apparatus according to claim 1 or 2, **characterized in that** it comprises a parking brake subassembly (113) operably connected to the subassembly (100).

4. The apparatus according to one or several of the previous claims, **characterized in that** the disk brake caliper body (109) is mechanically and/or hydraulically actuatable.

5. A method to assemble an apparatus according to one or several of the previous claims, comprising locking a plurality of threaded fasteners (102) to a mounting plate (101) and attaching a disk brake caliper body (109) and a pair of disk brake pads (110, 111) to the mounting plate (101).

6. The method according to claim 5 further comprising positioning the pair of disk brake pads (110, 111) on opposing sides of a rotor (116).

7. The method according to claim 5 or 6 further comprising attaching the threaded fasteners (102) to a flange (115, 125) surrounding a motor vehicle axle.

8. The method according to one or several of the claims 5 to 7, further comprising attaching the rotor (116) to an end of the motor vehicle axle.

9. An apparatus comprising a motor vehicle axle having an end and a laterally extending flange (115, 125) surrounding at least a part of the axle, a rotor (116) mountable to the end of the axle, **characterized by** an apparatus according to one or several of the claims 1 to 4 through which the axle extends, the pair of opposing disk brake pads (110, 111) positionable on each side of the rotor (116) and the plurality of threaded fasteners (102) insertable through the laterally extending flange (115, 125), the threaded fasteners (102) locked to the disk brake subassembly (100) before attachment of the fasteners (102) to the laterally extending flange (115, 125).

10. The apparatus according to claim 9 wherein the disk brake subassembly (100) further comprises a parking brake subassembly (113) and/or a plurality of caliper pins (112) extending between the disk brake caliper body (109) and disk brake pads (110, 111).

11. The apparatus according to claim 9 or 10 further comprising a pair of laterally extending flanges (115, 125).

12. The apparatus according to one or several of the claims 9 to 11, **characterized in that** the disk brake subassembly (113) includes a mounting plate (101) having an opening (105) through which the axle extends, preferably the mounting plate (101) having a pair of legs (103, 104), the threaded fasteners (102) being locked to the legs (103, 104) and/or having a plurality of holes through which the threaded fasteners (102) may be inserted and locked.

13. The apparatus according to one or several of the claims 9 to 12, **characterized in that** the threaded fasteners (102) have a knurled portion to lock to the holes in the mounting plate (101).

14. The apparatus according to one or several of the claims 9 to 13, **characterized in that** the disk brake caliper body (109) further comprises a hydraulically actuatable piston.

## Patentansprüche

1. Vorrichtung, die eine Trägerplatte (101) zum Tragen eines Scheibenbremssattelkörpers (109) und eines Paars Scheibenbremsklötze (110, 111) umfasst, **dadurch gekennzeichnet, dass** die Trägerplatte (101), der Scheibenbremssattelkörper (109) und das Paar Scheibenbremsklötze (110, 111) eine Untereinheit (100) bilden, wobei die Trägerplatte (101) mehrere vorzugsweise mit Gewinde versehene Befestigungselemente (102) aufweist, die daran arretiert sind und sich von dort aus erstrecken.

2. Vorrichtung nach Anspruch 1, **dadurch gekennzeichnet, dass** die Trägerplatte (101) eine Öffnung (105) hat, durch die sich eine Achse eines Kraftfahrzeugs erstrecken kann, und/oder dass die Trägerplatte (101) eine Öffnung (108) hat, durch die sich der Scheibenbremssattelkörper (109) erstrecken kann.

3. Vorrichtung nach Anspruch 1 oder 2, **dadurch gekennzeichnet, dass** sie eine Feststellbremsuntereinheit (113) umfasst, die betriebswirksam mit der Untereinheit (100) verbunden ist.

4. Vorrichtung nach einem oder mehreren der vorstehend aufgeführten Ansprüche, **dadurch gekennzeichnet, dass** der Scheibenbremssattelkörper (109) mechanisch und/oder hydraulisch betätigt werden kann.

5. Verfahren zur Montage einer Vorrichtung nach einem oder mehreren der vorstehend aufgeführten Ansprüche, wobei das Verfahren das Arretieren von mehreren mit Gewinde versehenen Befestigungselementen (102) an einer Trägerplatte (101) sowie das Befestigen eines Scheibenbremssattelkörpers (109) und eines Paars Scheibenbremsklötze (110, 111) an der Trägerplatte (101) umfasst.

6. Verfahren nach Anspruch 5, das weiterhin das Positionieren des Paars Scheibenbremsklötze (110, 111) an gegenüberliegenden Seiten eines Rotors (116) umfasst.

7. Verfahren nach Anspruch 5 oder 6, das weiterhin das Befestigen der mit Gewinde versehenen Befestigungselemente (102) an einem eine Kraftfahrzeugachse umgebenden Flansch (115, 125) umfasst.

8. Verfahren nach einem oder mehreren der Ansprüche 5 bis 7, das weiterhin das Befestigen des Rotors (116) an einem Ende der Kraftfahrzeugachse umfasst.

9. Vorrichtung, die eine Kraftfahrzeugachse mit einem Ende und einen sich seitlich erstreckenden Flansch (115, 125), der mindestens einen Teil der Achse umgibt, umfasst, wobei ein Rotor (116) am Ende der Achse montiert werden kann, **gekennzeichnet durch** eine Vorrichtung nach einem oder mehreren der Ansprüche 1 bis 4, **durch** die sich die Achse erstreckt, wobei das Paar gegenüberliegender Scheibenbremsklötze (110, 111) an jeder Seite des Rotors (116) positioniert und die mehreren mit Gewinde versehenen Befestigungselemente (102) durch den sich seitlich erstreckenden Flansch (115, 125) eingesetzt werden können, wobei die mit Gewinde versehenen Befestigungselemente (102) an der Scheibenbremsuntereinheit (100) arretiert werden können, bevor die Befestigungselemente (102) am sich seitlich erstreckenden Flansch (115, 125) befestigt werden.

10. Vorrichtung nach Anspruch 9, bei der die Scheibenbremsuntereinheit (100) weiterhin eine Feststellbremsuntereinheit (113) und/oder mehrere Sattelbolzen (112) umfasst, die sich zwischen dem Scheibenbremssattelkörper (109) und den Scheibenbremsklötzen (110, 111) erstrecken.

11. Vorrichtung nach Anspruch 9 oder 10, die weiterhin ein Paar sich seitlich erstreckender Flansche (115, 125) umfasst.

12. Vorrichtung nach einem oder mehreren der Ansprüche 9 bis 11, **dadurch gekennzeichnet, dass** die Scheibenbremsuntereinheit (113) eine Trägerplatte (101) mit einer Öffnung (105) beinhaltet, durch die sich die Achse erstreckt, wobei die Trägerplatte (101) vorzugsweise ein Paar Füße (103, 104) hat, wobei die mit Gewinde versehenen Befestigungselemente (102) an den Füßen (103, 104) arretiert werden können, und/oder mehrere Löcher aufweist, durch die die mit Gewinde versehenen Befestigungselemente (102) eingeführt und arretiert werden können.

13. Vorrichtung nach einem oder mehreren der Ansprüche 9 bis 12, **dadurch gekennzeichnet, dass** die mit Gewinde versehenen Befestigungselemente (102) einen gerändelten Abschnitt besitzen, um ein Arretieren in den Löchern der Trägerplatte (101) zu ermöglichen.

14. Vorrichtung nach einem oder mehreren der Ansprüche 9 bis 13, **dadurch gekennzeichnet, dass** der Scheibenbremssattelkörper (109) weiterhin einen Kolben umfasst, der hydraulisch betätigt werden kann.

## Revendications

1. Appareil comprenant une plaque de support (101) portant un corps d'étrier de frein à disque (109) et une paire de garnitures de frein à disque (110, 111), **caractérisé en ce que** la plaque de support (101), le corps d'étrier de frein à disque (109) et la paire de garnitures de frein à disque (110, 111) forment un sous-ensemble (100), la plaque de support (101) comprenant une pluralité d'éléments de fixation de préférence filetés (102) calés sur celle-ci et s'étendant à partir de celle-ci.

2. Appareil selon la revendication 1, **caractérisé en ce que** la plaque de support (101) comporte une ouverture (105) à travers laquelle un essieu de véhicule à moteur peut s'étendre, et/ou **en ce que** la plaque de support (101) comporte une ouverture (108) à travers laquelle le corps d'étrier de frein à disque (109) peut s'étendre.

3. Appareil selon la revendication 1 ou 2, **caractérisé en ce qu'**il comprend un sous-ensemble de frein de stationnement (113) qui est connecté de façon opérationnelle au sous-ensemble (100).

4. Appareil selon l'une quelconque ou plusieurs des revendications précédentes, **caractérisé en ce que** le corps d'étrier de frein à disque (109) peut être actionné de façon mécanique et/ou hydraulique.

5. Procédé pour assembler un appareil selon l'une quelconque ou plusieurs des revendications précédentes, comprenant le calage d'une pluralité d'éléments de fixation filetés (102) sur une plaque de support (101) et la fixation d'un corps d'étrier de frein à disque (109) et d'une paire de garnitures de frein à disque (110, 111) sur la plaque de support (101).

6. Procédé selon la revendication 5, comprenant en outre le positionnement d'une paire de garnitures de frein à disque (110, 111) sur des côtés opposés d'un rotor (116).

7. Procédé selon la revendication 5 ou 6, comprenant en outre la fixation des éléments de fixation filetés (102) sur une bride (115, 125) qui entoure un essieu de véhicule à moteur.

8. Procédé selon l'une quelconque ou plusieurs des revendications 5 à 7, comprenant en outre la fixation du rotor (116) à une extrémité de l'essieu de véhicule à moteur.

9. Appareil comprenant un essieu de véhicule à moteur possédant une extrémité et une bride s'étendant latéralement (115, 125) qui entoure au moins une partie de l'essieu, un rotor (116) qui peut être monté sur l'extrémité de l'essieu, **caractérisé par** un appareil selon l'une quelconque ou plusieurs des revendications 1 à 4 à travers lequel l'essieu s'étend, les garnitures composant la paire de garnitures de frein à disque opposées (110, 111) pouvant être positionnées de part et d'autre du rotor (116), et les éléments composant la pluralité d'éléments de fixation filetés (102) pouvant être insérés à travers la bride s'étendant latéralement (115, 125), les éléments de fixation filetés (102) étant calés sur le sous-ensemble de frein à disque (100) avant la fixation des éléments de fixation (102) à la bride s'étendant latéralement (115, 125).

10. Appareil selon la revendication 9, dans lequel le sous-ensemble d'étrier de frein à disque (100) comprend en outre un sous-ensemble de frein de stationnement (113) et/ou une pluralité d'axes de maintien d'étrier (112) qui s'étendent entre le corps d'étrier de frein à disque (109) et les garnitures de frein à disque (110, 111).

11. Appareil selon la revendication 9 ou 10, comprenant en outre une paire de brides s'étendant latéralement (115, 125).

12. Appareil selon l'une quelconque ou plusieurs des revendications 9 à 11, **caractérisé en ce que** le sous-ensemble de frein à disque (113) comprend une plaque de support (101) comportant une ouverture (105) à travers laquelle l'essieu s'étend, la plaque de support (101) comprenant de préférence une paire de branches (103, 104), les éléments de fixation filetés (102) étant calés sur les branches (103, 104) et/ou comportant une pluralité de trous à travers lesquels les éléments de fixation filetés (102) peuvent être insérés et calés.

13. Appareil selon l'une quelconque ou plusieurs des revendications 9 à 12, **caractérisé en ce que** les éléments de fixation filetés (102) présentent une partie moletée pour se caler dans les trous dans la plaque de support (101).

14. Appareil selon l'une quelconque ou plusieurs des revendications 9 à 13, **caractérisé en ce que** le corps d'étrier de frein à disque (109) comprend en outre un piston à commande hydraulique.
